# EUROPEAN PATENT APPLICATION

(11) **EP 4 368 906 A1**
(43) Date of publication of application: **15.05.2024**
(21) Application number: 22837496.3
(22) Date of filing: 23.06.2022
(51) Int. Cl.: F24F 11/49, F24F 11/52

(54) **SYSTEM AND METHOD**

(30) Priority: 09.07.2021 JP 2021114545
(71) Applicant: Daikin Industries, Ltd., Osaka-Shi, Osaka 530-0001 (JP)
(72) Inventor: TSUBOI, Kosuke, Osaka-shi, Osaka 530-0001 (JP); OCHI, Yasutaka, Osaka-shi, Osaka 530-0001 (JP); OHASHI, Yu, Osaka-shi, Osaka 530-0001 (JP)
(74) Representative: Hoffmann Eitle
(86) International application number: PCT/JP2022/025124
(87) International publication number: WO 2023/282079

(57) **Abstract**

To appropriately register information regarding an air conditioner in a server, a system including an air conditioner, a terminal connected to the air conditioner, and a server is provided. A control unit of the terminal is configured to acquire information regarding the air conditioner, and send the information regarding the air conditioner to the server. A control unit of the server is configured to store information regarding an air conditioner, which is scheduled to be connected to the terminal. The control unit of the server is configured to determine whether the information regarding the air conditioner, which is received from the terminal, and the information regarding the air conditioner, which is stored, match each other or not.

## Description

### Technical Field

The present disclosure relates to a system and a method.

### Background Art

Hitherto, services for remotely driving or monitoring air conditioners have been known. For these services, which air conditioners are installed where needs to be registered in a server. The method of persons who installed the air conditioners manually registering information regarding the air conditioners is not free from wrong information being registered.

A method that can notify information regarding an air conditioner to a server not manually but by using, for example, a smartphone has been proposed. Specifically, according to PTL 1, for example, a smartphone receives information, based on which a use-side device of an air conditioner is identified, from a remote controller and sends the information to a management server.

### Citation List

### Patent Literature

PTL 1: Japanese Patent No. 6956151

### Summary of Invention

### Technical Problem

However, existing methods may need the persons, who install air conditioners, to enter customers' living rooms in which use-side devices of the air conditioners are installed, and to register information using the customers' network environment. According to the present disclosure, it is an object to appropriately register information regarding an air conditioner in a server.

### Solution to Problem

A system according to a first embodiment of the present disclosure is a system including an air conditioner, a terminal connected to the air conditioner, and a server.

A control unit of the terminal is configured to acquire information regarding the air conditioner, and send the information regarding the air conditioner to the server.

A control unit of the server is configured to store information regarding an air conditioner, which is scheduled to be connected to the terminal.

The control unit of the server is configured to determine whether the information regarding the air conditioner, which is received from the terminal, and the information regarding the air conditioner, which is stored, match each other or not.

According to the first embodiment of the present disclosure, it is possible to appropriately register the information regarding the air conditioner in the server.

A second embodiment of the present disclosure is the system described in the first embodiment,
wherein the information regarding the air conditioner includes a name of a device type of the air conditioner and a number of devices of the air conditioner that are provided.

According to the second embodiment of the present disclosure, it is possible to appropriately register the information indicating the name of the device type of the air conditioner and the number of devices of each device type that are provided in the server.

A third embodiment of the present disclosure is the system described in the first embodiment or the second embodiment,
wherein the air conditioner includes a heat source-side device and a use-side device connected to the heat source-side device, and
the control unit of the terminal sends information regarding the heat source-side device and information regarding the use-side device to the server.

According to the third embodiment of the present disclosure, it is possible to appropriately register the information regarding the heat source-side device and the use-side device of an air conditioner in the server.

A fourth embodiment of the present disclosure is the system described in any one of the first embodiment to the third embodiment,
wherein in a case where the information regarding the air conditioner, which is received from the terminal, and the information regarding the air conditioner, which is stored, mismatch each other, the control unit of the server notifies an error.

According to the fourth embodiment of the present disclosure, a user can be notified that the air conditioner scheduled to be connected to the terminal and the air conditioner actually connected to the terminal mismatch each other.

A fifth embodiment of the present disclosure is the system described in any one of the first embodiment to the third embodiment,
wherein in a case where the information regarding the air conditioner, which is received from the terminal, and the information regarding the air conditioner, which is stored, mismatch each other, the control unit of the server determines that the information regarding the air conditioner, which is received from the terminal, is correct, and overwrites the information regarding the air conditioner, which is stored, with the information regarding the air conditioner, which is received from the terminal.

According to the fifth embodiment of the present disclosure, it is possible to overwrite the information regarding the air conditioner in the server with the correct information.

A sixth embodiment of the present disclosure is the system described in any one of the first embodiment to the third embodiment,
wherein in a case where the information regarding the air conditioner, which is received from the terminal, and the information regarding the air conditioner, which is stored, mismatch each other, the control unit of the server determines that the information regarding the air conditioner, which is stored, is correct, and notifies that the air conditioner is incorrectly installed.

According to the sixth embodiment of the present disclosure, a user can be notified that the air conditioner actually connected to the terminal is incorrect.

A seventh embodiment of the present disclosure is the system described in the sixth embodiment,
wherein a plurality of terminals are set in one landed property, each of the plurality of terminals being the terminal described above, and
the control unit of the server determines whether the air conditioner is correctly installed or not for each of the terminals.

According to the seventh embodiment of the present disclosure, it is possible to determine whether installation of the air conditioner is correct or not for each terminal in a landed property.

An eighth embodiment of the present disclosure is the system described in the sixth embodiment,
wherein the control unit of the server notifies a name of a device type of the air conditioner that is incorrectly installed.

According to the eighth embodiment of the present disclosure, a user can be notified of the name of the device type of the air conditioner that is incorrectly installed.

A ninth embodiment of the present disclosure is the system described in any one of the first embodiment to the eighth embodiment,
wherein in the information regarding the air conditioner, which is stored, a landed property and the terminal are associated with each other, and the terminal and a name of a device type of the air conditioner are associated with each other.

According to the ninth embodiment of the present disclosure, it is possible to determine, for each terminal in a landed property, whether the name of the device type of the air conditioner scheduled to be connected to the terminal and the name of the device type of the air conditioner actually connected to the terminal match each other or not.

A tenth embodiment of the present disclosure is the system described in any one of the first embodiment to the ninth embodiment,
wherein the information regarding the air conditioner, which is received from the terminal, includes information regarding a part attached to the air conditioner.

According to the tenth embodiment of the present disclosure, it is possible to identify the device type of an air conditioner based on the information regarding the part attached to the air conditioner.

An eleventh embodiment of the present disclosure is the system described in the tenth embodiment,
wherein the control unit of the server determines whether the part attached to the air conditioner is correct or not.

According to the eleventh embodiment of the present disclosure, it is possible to determine whether the part attached to the air conditioner is correct or not.

A method according to a twelfth embodiment of the present disclosure is a method performed by a system including an air conditioner, a terminal connected to the air conditioner, and a server, and includes:
the terminal acquiring information regarding the air conditioner and sending the information regarding the air conditioner to the server;
the server storing information regarding an air conditioner, which is scheduled to be connected to the terminal; and
the server determining whether the information regarding the air conditioner, which is received from the terminal, and the information regarding the air conditioner, which is stored, match each other or not.

### Brief Description of Drawings

[FIG. 1] FIG. 1 is a diagram illustrating an overall configuration according to an embodiment of the present disclosure.
[FIG. 2] FIG. 2 is a diagram illustrating a hardware configuration of a terminal (communication adapter) according to an embodiment of the present disclosure.
[FIG. 3] FIG. 3 is a diagram illustrating a hardware configuration of a server according to an embodiment of the present disclosure.
[FIG. 4] FIG. 4 is a sequence diagram of a process performed by an air conditioning system according to an embodiment of the present disclosure.
[FIG. 5] FIG. 5 is a diagram illustrating information regarding an air conditioner registered in a server according to an embodiment of the present disclosure.

### Description of Embodiments

An embodiment of the present disclosure will be described below with reference to the drawings.

### <Glossary>

- In the present specification, a "communication adapter" is a terminal having a control function and a communication function. The communication adapter can acquire information regarding an air conditioner from a heat source-side device (outdoor unit) of the air conditioner and send the information regarding the air conditioner to a server.
- In the present specification, "information regarding an air conditioner" is information based on which an air conditioner is identified. For example, information regarding an air conditioner includes information based on which the device types of a heat source-side device (outdoor unit) and a use-side device (indoor unit) of the air conditioner are identified, and the number of devices of each device type that are provided. For example, the information based on which a device type is identified is the name of the device type and a product serial number.

### <System configuration>

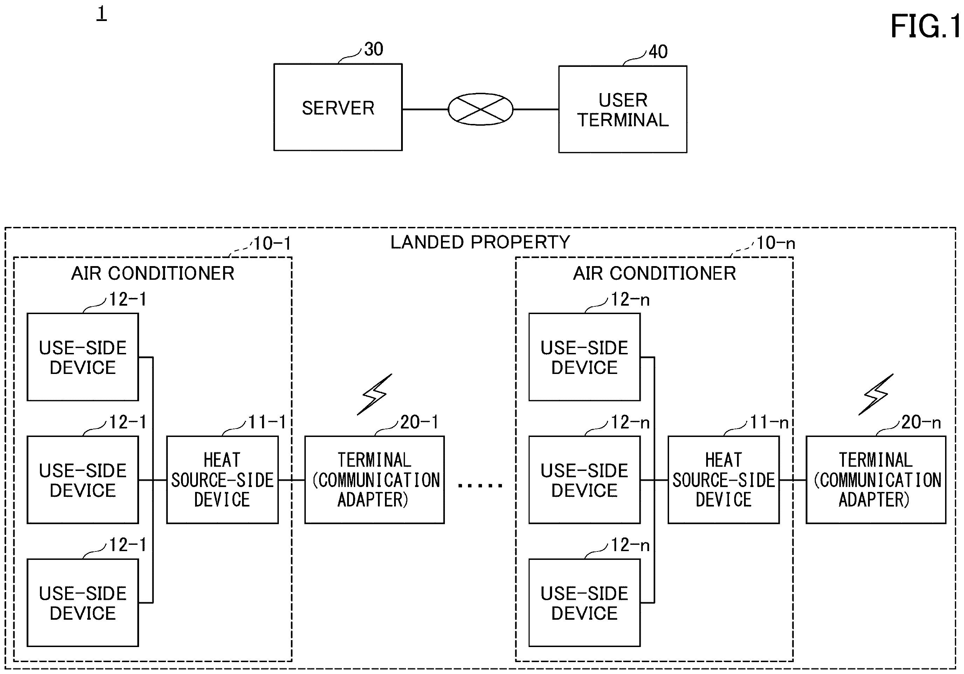

FIG. 1 is a diagram illustrating an overall configuration according to an embodiment of the present disclosure. It is assumed that an air conditioner 10-1, ..., and an air conditioner 10-n (n being an integer greater than or equal to 1) are installed in a given landed property.

A landed property is a place where an air conditioner is installed. For example, a landed property is a building, and a floor of a building. One or a plurality of air conditioners are installed in one landed property.

As illustrated in FIG. 1, an air conditioning system 1 includes: an air conditioner 10-1, ..., and an air conditioner 10-n (hereinafter, the air conditioner 10-1, ..., and the air conditioner 10-n may also be referred to as the air conditioner(s) 10 generically); a terminal (communication adapter) 20-1, ..., and a terminal (communication adapter) 20-n (hereinafter, the terminal (communication adapter) 20-1, ..., and the terminal (communication adapter) 20-n may also be referred to as the terminal(s) (communication adapter(s)) 20 generically); a server 30; and a user terminal 40. Each will be described below.

### <<Air conditioners

The air conditioner 10 is an air conditioner of a desirably selected device type. The air conditioner 10-1, ..., and the air conditioner 10-n include: a heat source-side device 11-1, ..., and a heat source-side device 11-n (hereinafter, the heat source-side device 11-1, ..., and the heat source-side device 11-n may also be referred to as the heat source-side device(s) 11 generically); and a use-side device 12-1, ..., and a use-side device 12-n (hereinafter, the use-side device 12-1, ..., and the use-side device 12-n may also be referred to as the use-side devices 12 generically), respectively. One or a plurality of use-side devices 12 are connected to the heat source-side device 11. The heat source-side device 11 is also referred to as an outdoor unit, and the use-side device 12 is also referred to as an indoor unit.

The terminal (communication adapter) 20-1, ..., and the terminal (communication adapter) 20-n are connected to the heat source-side device 11-1, ..., and the heat source-side device 11-n, respectively.

The air conditioner 10 may include a plurality of heat source-side devices 11. In this case, the terminal (communication adapter) 20 is connected to one heat source-side device of the plurality of heat source-side devices (the one heat source-side device is referred to as a parent heat source-side device, and those other than the parent heat source-side devices are referred to as child heat source-side devices).

### <<Terminal (communication adapter)>>

The terminal (communication adapter) 20 is a terminal having a control function and a communication function (also referred to as an edge of Internet of Things (IoT)). The terminal (communication adapter) 20 can communicate with the server 30 through a wireless communication such as Long Term Evolution (LTE). The terminal (communication adapter) 20 acquires information regarding the air conditioner 10 from the heat source-side device 11, and sends the information regarding the air conditioner 10 to the server 30.

In a case where the air conditioner 10 includes a plurality of heat source-side devices 11, the terminal (communication adapter) 20 connected to the parent heat source-side device can send information regarding the parent heat source-side device and a child heat source-device (the information being, e.g., the name of each device type, and the number of devices of each device type that are provided) and information regarding use-side devices (the information being, e.g., the name of each device type, and the number of devices of each device type that are provided) to the server 30.

### <<Server>>

The server 30 can exchange data with the terminal (communication adapter) 20 and the user terminal 40 through a desirably selected network. The server 30 is formed by one or a plurality of computers.

The server 30 registers the following previously (specifically, before the air conditioner 10 is installed): information regarding an air conditioner 10, which is scheduled to be connected to a terminal (communication adapter) 20. For example, the server 30 stores the following in a desirably selected memory device such as a memory device provided in the server 30: information regarding a heat source-side device 11 scheduled to be connected to a terminal (communication adapter) 20 (the information being, e.g., the name of each device type, and the number of devices of each device type that are provided); and information regarding a use-side device 12 scheduled to be connected to the heat source-side device 11 (the information being, e.g., the name of each device type, and the number of devices of each device type that are provided).

The server 30 receives information regarding an air conditioner 10 from a terminal (communication adapter) 20. For example, the server 30 receives information regarding a heat source-side device 11 connected to the terminal (communication adapter) 20 (the information being, e.g., the name of each device type, and the number of devices of each device type that are provided), and information regarding a use-side device 12 connected to the heat source-side device 11 (the information being, e.g., the name of each device type, and the number of devices of each device type that are provided) from the terminal (communication adapter) 20.

The server 30 determines whether the information regarding the air conditioner 10, which is received from the terminal (communication adapter) 20 and the information regarding the air conditioner 10, which is stored, match each other or not. For example, the server 30 determines whether the information regarding the heat source-side device 11 (e.g., the name of each device type, and the number of devices of each device type that are provided) and the information regarding the use-side device 12 (e.g., the name of each device type, and the number of devices of each device type that are provided), which are received from the terminal (communication adapter) 20, and information regarding a heat source-side device 11 (e.g., the name of each device type, and the number of devices of each device type that are provided) and information regarding a use-side device 12 (e.g., the name of each device type, and the number of devices of each device type that are provided), which are stored, match each other or not.

The server 30 performs a process that is in accordance with the result of determining the information regarding the air conditioner 10. For example, in a case where the information regarding the air conditioner 10 received from the terminal (communication adapter) 20 and the information regarding the air conditioner 10 stored mismatch each other, the server 30 may notify an error to the user terminal 40. For example, in a case where the information regarding the air conditioner 10 received from the terminal (communication adapter) 20 and the information regarding the air conditioner 10 stored mismatch each other, the server 30 may determine that the information regarding the air conditioner 10 received from the terminal (communication adapter) 20 is correct, and overwrite the information regarding the air conditioner 10 stored, with the information regarding the air conditioner 10 received from the terminal (communication adapter) 20. For example, in a case where the information regarding the air conditioner 10 received from the terminal (communication adapter) 20 and the information regarding the air conditioner 10 stored mismatch each other, the server 30 may determine that the information regarding the air conditioner 10 stored is correct, and notify the user terminal 40 that the air conditioner 10 is incorrectly installed.

### <<User terminal>>

The user terminal 40 is, for example, a device such as a smartphone, a tablet, and a personal computer. For example, a person who installs an air conditioner 10 uses the user terminal 40. The user terminal 40 may receive a notification that the information regarding the air conditioner 10, which the server 30 receives from the terminal (communication adapter) 20, and the information regarding the air conditioner 10, which the server 30 stores, mismatch each other from the server 30.

### <Hardware configuration>

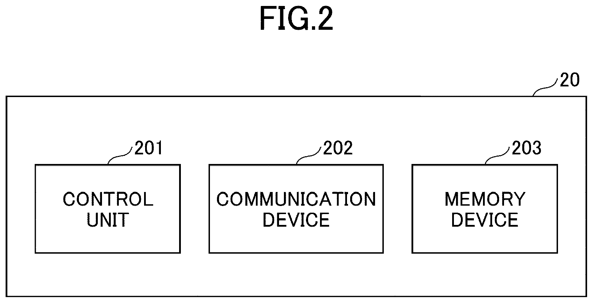

FIG. 2 is a diagram illustrating the hardware configuration of the terminal (communication adapter) 20 according to an embodiment of the present disclosure. The terminal (communication adapter) 20 includes a control unit 201, a communication device 202, and a memory device 203.

The control unit 201 is a processor such as a Central Processing Unit (CPU). By the control unit 201 executing a program, each process described in the present specification is performed.

The communication device 202 is a sending device and a receiving device configured to communicate with, for example, the server 30 through a desirably selected network (e.g., a wireless communication such as LTE) .

The memory device 203 is a memory in which the control unit 201 stores data.

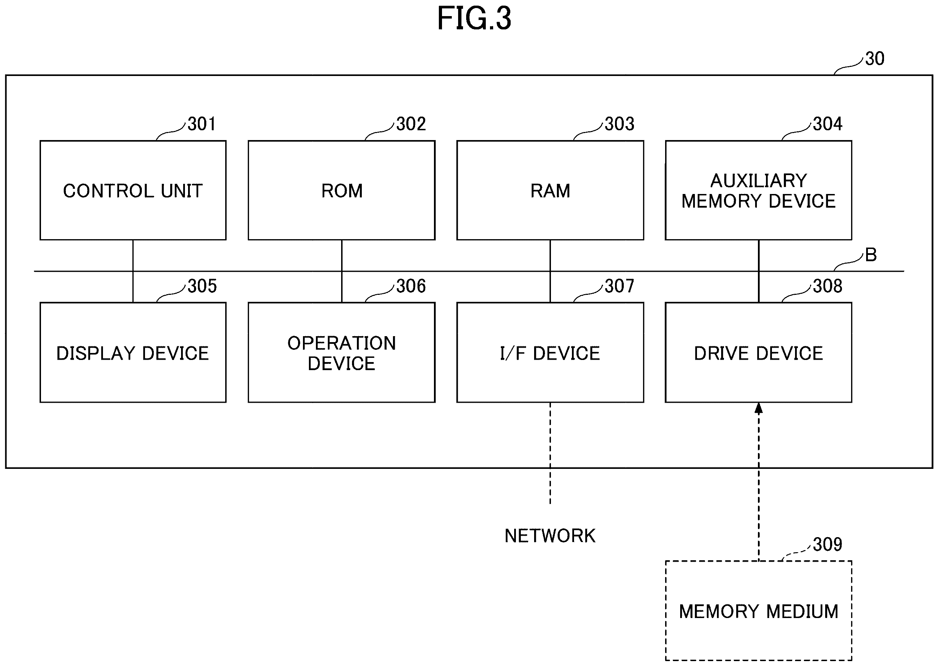

FIG. 3 is a diagram illustrating the hardware configuration of the server 30 according to an embodiment of the present disclosure. The server 30 includes a control unit 301, a Read Only Memory (ROM) 302, and a Random Access Memory (RAM) 303. The control unit 301, the ROM 302, and the RAM 303 form what is generally referred to as a computer.

The server 30 may include an auxiliary memory device 304, a display device 305, an operation device 306, an Interface (I/F) device 307, and a drive device 308. The hardware components of the server 30 are mutually connected through a bus B.

The control unit (e.g., CPU) 301 is an arithmetic device configured to execute various programs installed in the auxiliary memory device 304. By the control unit 301 executing the programs, each process described in the present specification is performed.

The ROM 302 is a nonvolatile memory. The ROM 302 functions as a main memory device configured to store, for example, various programs and data necessary for the control unit 301 to execute various programs installed in the auxiliary memory device 304. Specifically, the ROM 302 functions as a main memory device configured to store, for example, a boot program such as a Basic Input/Output System (BIOS) or an Extensible Firmware Interface (EFI).

The RAM 303 is a volatile memory such as a Dynamic Random Access Memory (DRAM) and a Static Random Access Memory (SRAM). The RAM 303 functions as a main memory device configured to provide a work area in which various programs installed in the auxiliary memory device 304 are deployed when executed by the control unit 301.

The auxiliary memory device 304 is an auxiliary memory device configured to store various programs and information used when the various programs are executed.

The display device 305 is a display device configured to display, for example, an internal state of the server 30.

The operation device 306 is an input device configured for an operator of the server 30 to input various instructions into the server 30.

The I/F device 307 is a communication device configured to connect to a network and communicate with another device.

The drive device 308 is a device in which a memory medium 309 is set. The memory medium 309 meant here includes a medium configured to record information optically, electrically, or magnetically, such as a CD-ROM, a flexible disk, and a magneto-optical disk. The memory medium 309 may also include, for example, a semiconductor memory configured to record information electrically, such as a ROM and a flash memory.

For example, various programs to be installed in the auxiliary memory device 304 are installed by distributed memory media 309 being set in the drive device 308 and various programs recorded in the memory media 309 being read out by the drive device 308. Alternatively, various programs to be installed in the auxiliary memory device 304 may be installed by being downloaded from a network via the I/F device 307.

### <Processing method>

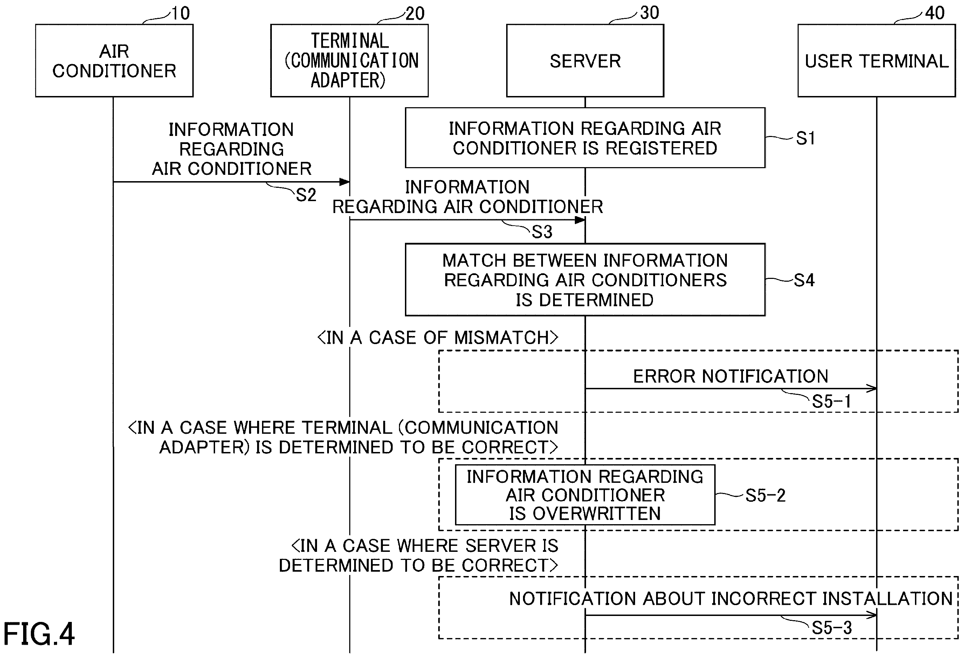

FIG. 4 is a sequence diagram of a process performed by the air conditioning system 1 according to an embodiment of the present disclosure.

In the step 1 (S1), the control unit 301 of the server 30 registers information regarding an air conditioner 10, which is scheduled to be connected to a terminal (communication adapter) 20, previously (specifically, before the air conditioner 10 is installed). For example, the control unit 301 of the server 30 stores the following in a desirably selected memory device such as a memory device provided in the server 30: information regarding a heat source-side device 11 scheduled to be connected to the terminal (communication adapter) 20 (the information being, e.g., the name of each device type, and the number of devices of each device type that are provided); and information regarding a use-side device 12 scheduled to be connected to the heat source-side device 11 (the information being, e.g., the name of each device type, and the number of devices of each device type that are provided).

Previous registration of the information regarding the air conditioner 10 in S1 is performed based on information provided by a customer.

In the step 2 (S2), the control unit 201 of the terminal (communication adapter) 20 acquires information regarding the air conditioner 10 from the heat source-side device 11 of the air conditioner 10. For example, the control unit 201 of the terminal (communication adapter) 20 acquires information regarding the heat source-side device 11 connected to the terminal (communication adapter) 20 (the information being, e.g., the name of each device type, and the number of devices of each device type that are provided), and information regarding the use-side device 12 connected to the heat source-side device 11 (the information being, e.g., the name of each device type, and the number of devices of each device type that are provided) from the heat source-side device 11 of the air conditioner 10.

For example, the control unit 201 of the terminal (communication adapter) 20 can start acquiring information regarding the air conditioner 10 in response to sensing that installation of the air conditioner 10 has been completed (specifically, in response to the terminal (communication adapter) 20 having been activated (i.e., in response to the terminal (communication adapter) 20 having been connected to the air conditioner 10 and being supplied with power from the air conditioner 10)).

In the step 3 (S3), the control unit 201 of the terminal (communication adapter) 20 sends the information regarding the air conditioner 10 acquired in S2, and information based on which the terminal (communication adapter) 20 is identified (e.g., ID of the terminal 20) to the server 30. Then, the control unit 301 of the server 30 receives the information regarding the air conditioner 10 and the information based on which the terminal (communication adapter) 20 is identified (e.g., ID of the terminal 20).

For example, the control unit 201 of the terminal (communication adapter) 20 can start sending the information regarding the air conditioner 10 in response to sensing that the acquisition of the information regarding the air conditioner 10 in S2 has been completed (specifically, in response to the terminal (communication adapter) 20 having sent all commands to air conditioners 10 and acquired information regarding all of the air conditioners 10).

In the step 4 (S4), the control unit 301 of the server 30 determines whether the information regarding the air conditioner 10 received from the terminal (communication adapter) 20 in S3 and the information regarding the air conditioner 10 stored in S1 match each other or not. For example, the server 30 determines whether the information regarding the heat source-side device 11 (e.g., the name of each device type, and the number of devices of each device type that are provided) and the information regarding the use-side device 12 (e.g., the name of each device type, and the number of devices of each device type that are provided), which are received from the terminal (communication adapter) 20 in S3, and the information regarding the heat source-side device 11 (e.g., the name of each device type, and the number of devices of each device type that are provided) and the information regarding the use-side device 12 (e.g., the name of each device type, and the number of devices of each device type that are provided), which are stored in S1, match each other or not.

In the step 5-1, the step 5-2, and the step 5-3, the control unit 301 of the server 30 performs a process that is in accordance with the result of determining the information regarding the air conditioner 10.

In a case where the information regarding the air conditioner 10 received from the terminal (communication adapter) 20 in S3 and the information regarding the air conditioner 10 stored in S1 mismatch each other, the control unit 301 of the server 30 can notify an error to the user terminal 40 in the step 5-1 (S5-1). The control unit 301 of the server 30 may display "error" on the server 30.

In a case where the information regarding the air conditioner 10 received from the terminal (communication adapter) 20 in S3 and the information regarding the air conditioner 10 stored in S1 mismatch each other, the control unit 301 of the server 30 can determine that the information regarding the air conditioner 10 received from the terminal (communication adapter) 20 is correct, and overwrite the information regarding the air conditioner 10 stored, with the information regarding the air conditioner 10 received from the terminal (communication adapter) 20 in the step 5-2 (S5-2).

In a case where the information regarding the air conditioner 10 received from the terminal (communication adapter) 20 in S3 and the information regarding the air conditioner 10 stored in S1 mismatch each other, the control unit 301 of the server 30 can determine that the information regarding the air conditioner 10 stored is correct, and notify the user terminal 40 that the air conditioner 10 is incorrectly installed (e.g., the name of the device type of the air conditioner 10 that is incorrectly installed) in the step 5-3 (S5-3). The server 30 may display that the air conditioner 10 is incorrectly installed on the server 30.

### information regarding air conditioner>

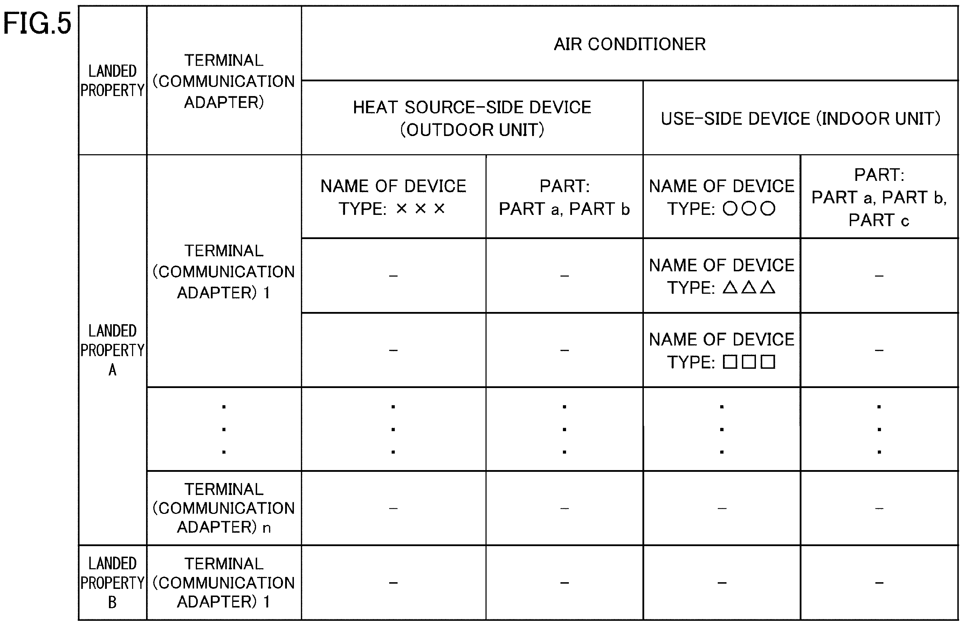

FIG. 5 is a diagram illustrating the information regarding the air conditioner 10 registered in the server 30 according to an embodiment of the present disclosure.

As illustrated in FIG. 5, the server 30 registers the following previously (specifically, before an air conditioner 10 is installed) per landed property: information regarding one or a plurality of terminals (communication adapters) 20, which are scheduled to be installed in the landed property; information regarding a heat source-side device 11, which is scheduled to be connected to the terminal (communication adapter) 20, (the information being, e.g., the name of each device type, and the number of devices of each device type that are provided); and information regarding one or a plurality of use-side devices 12, which are scheduled to be connected to the heat source-side device 11, (the information being, e.g., the name of each device type, and the number of devices of each device type that are provided).

In a case where an air conditioner 10 includes a plurality of heat source-side devices 11, the server 30 registers: information regarding a parent heat source-side device and a child heat source-side device (e.g., the name of each device type, and the number of devices of each device type that are provided); and information regarding a use-side device (e.g., the name of each device type, and the number of devices of each device type that are provided).

### <Identification of air conditioner based on part of the air conditioner>

Identification of an air conditioner 10 based on a part of the air conditioner 10 according to an embodiment of the present disclosure will be described below. Information regarding an air conditioner 10 may include information regarding a part (e.g., a compressor, and a sensor) attached to the air conditioner 10. The server 30 can identify an air conditioner 10 based on a part attached to the air conditioner 10.

The server 30 stores the following in a desirably selected memory device such as a memory device provided in the server 30 previously (specifically, before the air conditioner 10 is installed): information regarding a part, which is scheduled to be attached to a heat source-side device 11, and information regarding a part, which is scheduled to be attached to a use-side device 12. That is, as illustrated in FIG. 5, pieces of information regarding the parts scheduled to be attached to an air conditioner 10 are registered in the server 30.

The server 30 receives information regarding a part actually attached to a heat source-side device 11 and information regarding a part actually attached to a use-side device 12 from the terminal (communication adapter) 20.

The server 30 determines whether the pieces of information regarding the parts actually attached to the air conditioner 10, which are received from the terminal (communication adapter) 20, and the pieces of information regarding the parts scheduled to be attached to the air conditioner 10, which are stored, match each other or not. That is, the server 30 can determine whether the parts attached to the air conditioner 10 are correct or not.

In this way, the server 30 can identify an air conditioner 10 based on the parts attached to the air conditioner 10. For example, the server 30 can identify the device type of an air conditioner 10 based on a predetermined part and the number in which the predetermined part is provided. For example, the server 30 can also discriminate between air conditioners 10 that have the same device type name, but have different capabilities, based on a predetermined part and the number in which the predetermined part is provided.

The embodiments have been described above. However, it is to be understood that various modifications to the modes and particulars are applicable without departing from the spirit and scope of the claims.

This international application claims priority to Japanese Patent Application No. 2021-114545 filed July 9, 2021. The entire contents of Japanese Patent Application No. 2021-114545 are incorporated herein by reference.

### Reference Signs List

- 1: air conditioning system
- 10: air conditioner
- 11: heat source-side device
- 12: use-side device
- 20: terminal (communication adapter)
- 30: server
- 40: user terminal
- 201: control unit
- 202: communication device
- 203: memory device
- 301: control unit
- 302: ROM
- 303: RAM
- 304: auxiliary memory device
- 305: display device
- 306: operation device
- 307: I/F device
- 308: drive device
- 309: memory medium

## Claims

1. A system, comprising:
an air conditioner;
a terminal connected to the air conditioner; and
a server,
wherein a control unit of the terminal is configured to acquire information regarding the air conditioner, and send the information regarding the air conditioner to the server,
a control unit of the server is configured to store information regarding an air conditioner, which is scheduled to be connected to the terminal, and
the control unit of the server is configured to determine whether the information regarding the air conditioner, which is received from the terminal, and the information regarding the air conditioner, which is stored, match each other or not.

2. The system according to claim 1,
wherein the information regarding the air conditioner includes a name of a device type of the air conditioner and a number of devices of the air conditioner that are provided.

3. The system according to claim 1 or 2,
wherein the air conditioner includes a heat source-side device and a use-side device connected to the heat source-side device, and
the control unit of the terminal sends information regarding the heat source-side device and information regarding the use-side device to the server.

4. The system according to any one of claims 1 to 3,
wherein in a case where the information regarding the air conditioner, which is received from the terminal, and the information regarding the air conditioner, which is stored, mismatch each other, the control unit of the server notifies an error.

5. The system according to any one of claims 1 to 3,
wherein in a case where the information regarding the air conditioner, which is received from the terminal, and the information regarding the air conditioner, which is stored, mismatch each other, the control unit of the server determines that the information regarding the air conditioner, which is received from the terminal, is correct, and overwrites the information regarding the air conditioner, which is stored, with the information regarding the air conditioner, which is received from the terminal.

6. The system according to any one of claims 1 to 3,
wherein in a case where the information regarding the air conditioner, which is received from the terminal, and the information regarding the air conditioner, which is stored, mismatch each other, the control unit of the server determines that the information regarding the air conditioner, which is stored, is correct, and notifies that the air conditioner is incorrectly installed.

7. The system according to claim 6,
wherein a plurality of terminals are set in one landed property, each of the plurality of terminals being the terminal, and
the control unit of the server determines whether the air conditioner is correctly installed or not for each of the terminals.

8. The system according to claim 6,
wherein the control unit of the server notifies a name of a device type of the air conditioner that is incorrectly installed.

9. The system according to any one of claims 1 to 8,
wherein in the information regarding the air conditioner, which is stored, a landed property and the terminal are associated with each other, and the terminal and a name of a device type of the air conditioner are associated with each other.

10. The system according to any one of claims 1 to 9,
wherein the information regarding the air conditioner, which is received from the terminal, includes information regarding a part attached to the air conditioner.

11. The system according to claim 10,
wherein the control unit of the server determines whether the part attached to the air conditioner is correct or not.

12. A method performed by a system including an air conditioner, a terminal connected to the air conditioner, and a server, the method comprising:
the terminal acquiring information regarding the air conditioner and sending the information regarding the air conditioner to the server;
the server storing information regarding an air conditioner, which is scheduled to be connected to the terminal; and
the server determining whether the information regarding the air conditioner, which is received from the terminal, and the information regarding the air conditioner, which is stored, match each other or not.
